# FASCICULE DE BREVET EUROPEEN

(11) **EP 2 454 917 B1**
(45) Date de publication et mention de la délivrance du brevet: **06.06.2018**
(21) Numéro de dépôt: 10751984.5
(22) Date de dépôt: 08.07.2010
(51) Int. Cl.: H04W 88/04, H04W 40/12

(54) **SÉLECTION DE RELAIS DYNAMIQUES POUR DES COMMUNICATIONS COOPÉRATIVES DANS UN RÉSEAU MOBILE**
AUSWAHL VON DYNAMISCHEN RELAIS FÜR KOOPERATIVE KOMMUNIKAITON IN EINEM DRAHTLOSEN NETZWERK
SELECTION OF DYNAMIC RELAYS FOR COOPERATIVE COMMUNICATION IN WIRELESS NETWORK

(30) Priorité: 17.07.2009 FR 0954961
(43) Date de publication de la demande: 23.05.2012
(73) Titulaire: Orange, 75015 Paris (FR)
(72) Inventeur: PAPADOGIANNIS, Agisilaos, Garforth Leeds LS25 2BG (GB); HARDOUIN, Eric, F-75015 Paris (FR); SAADANI, Ahmed, F-92130 Issy Les Moulineaux (FR)
(74) Mandataire: Cabinet Plasseraud
(86) Numéro de dépôt international: PCT/FR2010/051449
(87) Numéro de publication internationale: WO 2011/007085

(56) Documents cités:
- WO-A-2004/107693
- US-A1- 2007 165 581
- US-A1- 2008 285 502
- TAE WON BAN ET AL: "Performance Analysis of Two Relay Selection Schemes for Cooperative Diversity" IEEE INTERNATIONAL SYMPOSIUM ON PERSONAL, INDOOR AND MOBILE RADIO COMMUNICATIONS. PIMRC, IEEE; PI, XX, 1 septembre 2007 (2007-09-01), pages 1-5, XP031168630 ISBN: 978-1-4244-1143-6
- IBRAHIM A S ET AL: "Cooperative communications with relay-selection: when to cooperate and whom to cooperate with?" IEEE TRANSACTIONS ON WIRELESS COMMUNICATIONS, IEEE SERVICE CENTER, PISCATAWAY, NJ, US, vol. 7, no. 7, 1 juillet 2008 (2008-07-01) , pages 2814-2827, XP011231626 ISSN: 1536-1276
- SEUNGHOON NAM ET AL: "Relay selection methods for wireless cooperative communications" INFORMATION SCIENCES AND SYSTEMS, 2008. CISS 2008. 42ND ANNUAL CONFERENCE ON, IEEE, PISCATAWAY, NJ, USA, 19 mars 2008 (2008-03-19), pages 859-864, XP031282984 ISBN: 978-1-4244-2246-3
- LUO J ET AL: "Link-Failure Probabilities for Practical Cooperative Relay Networks" VEHICULAR TECHNOLOGY CONFERENCE, 2005. VTC 2005-SPRING. 2005 IEEE 61ST, IEEE, PISCATAWAY, NJ, USA, vol. 3, 30 mai 2005 (2005-05-30), pages 1489-1493, XP010855670 ISBN: 978-0-7803-8887-1
- SRENG V ET AL: "Relayer selection strategies in cellular networks with peer-to-peer relaying" VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 3, 6 octobre 2003 (2003-10-06), pages 1949-1953, XP010702827 ISBN: 978-0-7803-7954-1
- SRENG V ET AL: "Coveragege enhancment through two-hop relaying in cellular radio systems" THESIS, XX, XX, 1 janvier 2002 (2002-01-01), pages 24-39, XP002986110

## Description

L'invention se situe dans le domaine des télécommunications, notamment des radiocommunications sans fil avec des terminaux mobiles.

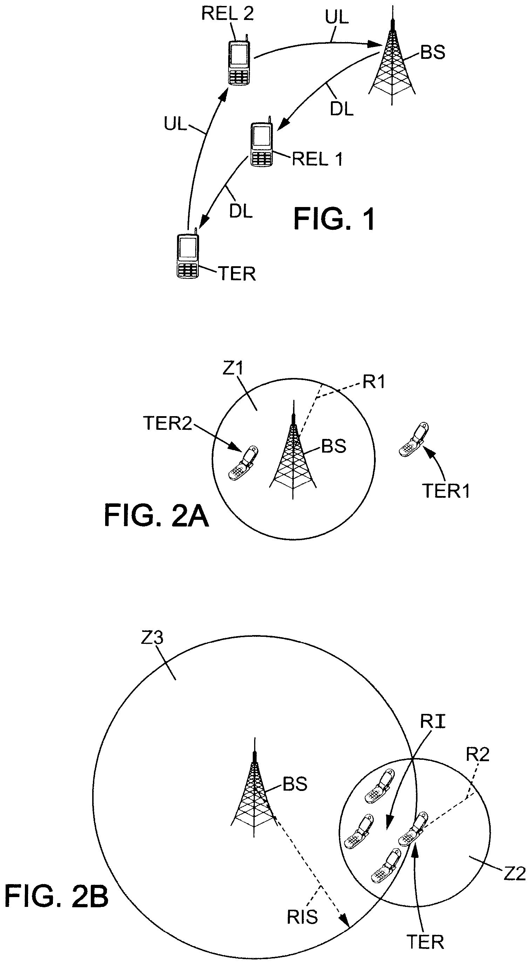

Elle concerne plus particulièrement une mise en oeuvre de communications coopératives exploitant des relais dynamiques dans un réseau mobile, notamment un réseau cellulaire dans lequel des stations de base ont une couverture radio de cellules respectives du réseau. En référence à la figure 1 illustrant la situation d'un réseau cellulaire, une communication coopérative désigne une technique d'émission où :
- en voie descendante DL (ou « downlink ») des terminaux TER reçoivent du signal utile d'une station de base BS via d'autres terminaux REL1 (un ou plus) qui relaient le signal utile émis par la station de base BS, et
- en voie montante UL (ou « uplink ») la station de base BS reçoit du signal utile issu d'un terminal émetteur TER via d'autres terminaux REL2 (un ou plus) qui relaient vers la station de base le signal émis.

Pour la clarté de présentation de la figure 1, seuls sont représentés les liens via des relais REL1, REL2. En pratique toutefois, les mêmes signaux peuvent être transmis par différents chemins :
- via des relais (comme représenté sur la figure 1), et
- directement entre la station de base BS et le terminal TER.

Avec par exemple deux signaux portant la même information et issus de noeuds du réseau différents (issus par exemple de la station de base directement, d'une part, et d'un ou plusieurs relais, d'autre part), cette diversité de « chemins » de communication empruntés permet d'augmenter le rapport signal à bruit à la réception des signaux.

Les communications coopératives dans un réseau cellulaire permettent aux terminaux (respectivement, aux stations de base) de recevoir du signal utile de la station de base (respectivement, des terminaux) et aussi d'autres noeuds du réseau (typiquement des noeuds relais) qui relaient le signal utile.

Une transmission qui exploite des noeuds relais doit utiliser un protocole de relais. Les protocoles de relais les plus connus sont :
- le protocole « Amplifier et Transférer » (AT) (pour « Amplify-and-Forward » en anglais), selon lequel le relais amplifie le signal qu'il reçoit et retransmet le signal ainsi amplifié, et
- le protocole « Décoder et Transférer » (DT) (pour « Decode-and-Forward » en anglais), selon lequel le relais décode le signal reçu avant de retransmettre le signal, ce qui permet d'éliminer le bruit initialement présent dans le signal reçu.

Les noeuds relais dans un réseau cellulaire peuvent être statiques ou dynamiques. Les noeuds relais statiques appartiennent à l'infrastructure du réseau et ils sont déployés dans des points particuliers, choisis, de la cellule. Les relais dynamiques sont plutôt des noeuds mobiles qui peuvent être par exemple des terminaux qui se situent dans une cellule donnée et qui se comportent comme des noeuds relais en aidant la transmission vers une destination (ou plus), cette destination pouvant être un terminal (cas « downlink ») ou une station de base (cas « uplink »).

Les communications coopératives (utilisation des noeuds relais) dans un réseau cellulaire peuvent augmenter la couverture de la cellule, améliorer la réception des signaux (en offrant un gain de diversité par exemple) et augmenter l'efficacité spectrale du réseau (qui est définie en bits par seconde, par Hertz et par cellule). La manière la plus facile d'exploiter des relais est simplement de déployer quelques relais statiques en des points particuliers de la cellule. Cette pratique rend la sélection des relais, pour une transmission particulière, assez facile car les relais potentiels sont limités.

La sélection des relais participant à une transmission particulière est nécessaire dans un système où beaucoup de relais (soit statiques soit dynamiques) peuvent exister. Il faut donc choisir les relais les plus pertinents et apportant réellement un gain de performance lorsqu'ils aident une transmission. En outre, il se peut, dans certaines situations, qu'il soit impossible de trouver des relais pertinents, de sorte que la transmission directe entre la source et la destination doit être imposée. De plus, si des relais statiques sont déployés, les points de déploiement des relais peuvent être choisis afin de garantir un bon lien entre les relais et les stations de base, ce qui peut augmenter l'efficacité de l'opération de relais.

Cependant, le déploiement des relais statiques augmente le coût des systèmes car il requiert que d'autres éléments d'infrastructure (noeuds relais) soient ajoutés. Au contraire, la mise en oeuvre de relais dynamiques ne nécessite pas un coût d'infrastructure supplémentaire. Les terminaux utilisateurs disponibles dans une cellule peuvent relayer des signaux afin d'aider la transmission vers d'autres terminaux. Les relais dynamiques peuvent être appliqués aussi bien en voie descendante qu'en voie montante. Néanmoins, l'utilisation de relais dynamiques pose des problèmes de complexité et de charge sur la voie de retour. La voie de retour désigne une transmission du terminal vers la station de base destinée à fournir à cette dernière des informations de contrôle sur le terminal, comme par exemple la qualité de son canal.

Les informations transmises sur la voie de retour représentent une perte d'efficacité spectrale pour le système, car elles occupent des ressources radio qui ne peuvent pas être utilisées pour la transmission de signaux utiles. En effet, pour sélectionner le relais (ou les relais) pour assurer la transmission vers une destination, la station de base (entité qui prend habituellement de telles décisions dans un système cellulaire) doit acquérir des informations sur l'état des canaux de transmission (ou « CSI » pour « Channel State Information » en anglais) entre la source et les relais potentiels, ainsi qu'entre les relais potentiels et la destination. L'information CSI peut par exemple être constituée de coefficients des canaux de transmission ou d'autre information plus concise sur la qualité du canal, comme par exemple le gain du canal ou un rapport signal sur interférence et bruit, ou autres.

Ci après, on entend par "gain du canal" le rapport entre la puissance reçue aux antennes de réception et la puissance émise par les antennes d'émission. Ce gain dépend :
- des pertes de propagation (ou « pathloss » en anglais), croissantes avec la distance entre un noeud émetteur et un noeud récepteur,
- de l'effet de masque (« shadowing » en anglais),
- ainsi que des évanouissements rapides du canal (ou « fast fading » en anglais). Ci-après, on entend aussi par « atténuation » l'effet cumulatif des pertes de propagation et de l'effet de « masque » ; en pratique, l'atténuation peut être estimée par exemple par l'inverse du gain du canal (et dépend alors du fast fading). En estimant une moyenne de l'inverse du gain de canal sur plusieurs valeurs successives, on peut réduire la dépendance au fast fading de l'atténuation estimée.

La transmission de l'information sur l'état des canaux de transmission CSI augmente la charge sur la voie de retour, ainsi que la complexité du procédé de sélection des relais. En effet, la charge sur la voie de retour et la complexité du procédé de sélection sont proportionnelles au nombre des terminaux candidats pour l'opération de relais. Actuellement, il n'est pas connu de technique pour réduire le nombre de relais potentiels capables d'aider la transmission vers un terminal ou une station de base. Ainsi, le nombre de noeuds relais candidats pour une transmission particulière n'est pas réduit actuellement et la complexité de la sélection, ainsi que la charge sur la voie de retour rendent difficile l'opération de relais dans un réseau cellulaire.

Dans le cadre des réseaux ad-hoc qui emploient la transmission multi-sauts, une technique à été proposée pour la sélection des noeuds relais dans :
"Geographic Random Forwarding (GeRaF) for Ad Hoc and Sensor Networks: Multihop Performance", M. Zorzi et R. R. Rao, IEEE Transactions on Mobile Computing, vol. 2, no. 4, pages 337-348 (octobre-décembre 2003).

Selon cette technique, le noeud transmettant des données (« noeud » source) connaît ses coordonnées géographiques et les coordonnées du noeud qui veut recevoir le message de la source (noeud destination). La source émet un paquet qui contient ses coordonnées et les coordonnées du noeud destination. Tous les noeuds qui reçoivent le paquet estiment leur distance à la source et à la destination, en se basant sur les coordonnées reçues. Les noeuds qui sont plus proches de la destination que la source deviennent candidats pour l'opération de relais. Pour définir le relais, une priorité est attribuée à chaque noeud candidat en fonction de leur proximité de la destination, et le noeud ayant la plus haute priorité (le plus proche de la destination) est finalement sélectionné. Cette technique est ciblée pour les réseaux ad-hoc et ne prend pas en compte l'effet de masque, qui pourtant est essentiel pour des réseaux cellulaires, ni les évanouissements rapides du canal (« fast fading » en anglais). De plus, cette technique exige que les noeuds utilisent un récepteur de type GPS (pour « Global Positioning System ») pour estimer leurs coordonnées géographiques, ce qui augmente le coût du système.

Une technique pour la sélection du meilleur relais entre une source et une destination basée sur la qualité des canaux instantanés source-relais et relais-destination a été proposée dans :
"A Simple Cooperative Diversity Method Based on Network Path Selection", A. Bletsas, A. Khisti, D. P. Reed et A. Lippman, IEEE Journal on Selected Areas in Communications, vol. 24, no. 3, pages 659-672 (mars 2006).

Dans cette technique, une source envoie un paquet RTS (appelé « Ready-To-Send » dans ce document, pour "prêt à envoyer") et tous les noeuds du voisinage estiment le gain du canal entre la source et eux-mêmes. Ce paquet est entendu par le noeud de destination qui envoie un paquet CTS (« Clear-To-Send » en anglais, pour "autorisation d'envoyer"), lequel permet aux noeuds du voisinage d'estimer le gain du canal entre la destination et eux-mêmes. Après la réception du paquet CTS, les relais potentiels enclenchent un chronomètre qui expire en fonction de la qualité courante des deux canaux (source-relais et relais-destination). Ainsi, le relais qui a le chronomètre qui expire le plus rapidement est le meilleur relais et envoie un paquet drapeau (« flag » en anglais). Ce paquet drapeau est alors entendu par d'autres relais candidats qui arrêtent leurs chronomètres.

Cette technique ne prend pas en compte, quant à elle, la structure des réseaux cellulaires qui peut être exploitée pour simplifier le procédé de sélection des relais.

Les techniques proposées par Zorzi et al (2003) et Bletsas et al (2006), qui sont plutôt adaptées pour des réseaux ad-hoc, ont donc pour principe que la transmission entre la source et la destination est toujours aidée par un noeud relais (lorsque des relais potentiels existent). Toutefois, l'utilisation d'un relais n'augmente pas toujours la capacité de la transmission. Par conséquent, dans un système réel, un relais doit être utilisé uniquement s'il augmente réellement les performances de la transmission.

Les performances de la transmission peuvent être estimées par exemple sur la base d'une capacité de la transmission en exploitant un relais particulier, la capacité de la transmission pouvant alors être un critère de performance. On entend par « capacité de la transmission », selon la métrique choisie, le débit offert pour la transmission, ou sa qualité de service (ou « QoS »), ou encore son rapport signal à bruit, ou tout autre critère de ce type. Il convient de préciser alors que, par exemple pour le critère de débit offert, un relais fait perdre de la ressource, en intervalle de temps d'allocation de ressource (ou « TTI », pour « transmission time interval » en anglais), ce qui diminue le débit total du système.

Par exemple, pour une transmission en mode dit « half duplex » (le relais ne transmettant pas en même temps en uplink et en downlink), l'utilisation d'un relais demande deux intervalles de temps de transmission (« TTI ») :
- l'un pour transmettre de la source vers le relais, et
- l'autre pour transmettre du relais vers la destination.

La durée TTI est classiquement l'intervalle de temps élémentaire pendant lequel des ressources radio peuvent être attribuées à un terminal. Donc, la capacité d'une transmission atteinte avec l'aide d'un noeud relais est divisée par un facteur deux dans le mode d'opération « half duplex ». Ainsi, la performance de l'opération de relais en mode « half duplex » est limitée par ce facteur. Par conséquent, dans tous les modes d'opération (half duplex ou full duplex), si la transmission par un noeud relais n'augmente pas réellement la capacité de la transmission, l'opération de relais est contreproductive.

La présente invention vient améliorer la situation.

A cet effet, elle propose tout d'abord un procédé de sélection d'au moins un noeud dynamique dans un réseau mobile, en tant que candidat pour relayer un signal de communication de données entre une entité émettrice et une entité réceptrice du réseau.

Le procédé comporte les étapes :
- déterminer au moins un premier ensemble de noeuds du réseau tels qu'un signal communiqué entre l'un des noeuds du premier ensemble et au moins une première entité parmi lesdites entités émettrice et réceptrice subit une atténuation inférieure à un premier seuil prédéterminé, et
- limiter la sélection de noeuds en tant que candidats possibles pour relayer le signal de communication en fonction du contenu de ce premier ensemble.

Ainsi, la présente invention propose de tenir compte de l'effet d'atténuation dans la communication des signaux entre les entités émettrice et réceptrice, d'une part, et les noeuds du réseau, d'autre part, par comparaison avec des seuils prédéterminés, pour établir une présélection des noeuds susceptibles de jouer le rôle de relais et éliminer de cette présélection les noeuds pouvant être ignorés. Au préalable, on peut déjà tenir compte de l'atténuation d'un signal communiqué entre les entités émettrice et réceptrice pour déterminer si le recours à un relais est réellement nécessaire ou si une communication directe entre les entités émettrice et réceptrice peut être décidée.

Ainsi, cette présélection des noeuds susceptibles d'intervenir pour le relais et surtout l'élimination des noeuds qui ne sont pas retenus comme candidats, en fonction des critères d'atténuation précités, permet d'alléger le procédé de sélection définitive des noeuds, tel qu'il était connu dans l'art antérieur où l'on sélectionnait *a priori* tous les noeuds comme candidats possibles pour le relais. Au sens de l'invention, on élimine d'emblée certains des noeuds, s'ils ne respectent pas des conditions particulières de leur atténuation par rapport à un seuil.

Plusieurs modes de réalisation sont envisagés, en variante ou en complément, pour la limitation des noeuds candidats.

Dans une réalisation avantageuse notamment dans le cas d'un réseau cellulaire, il peut être décidé par exemple que les terminaux de la cellule situés dans une première zone autour de la station de base (par exemple la zone Z1 correspondant à un disque de rayon R1 de la figure 2A décrite ci-après), dans laquelle l'atténuation est inférieure à un seuil donné, n'ont pas besoin de relais pour communiquer avec la station de base. Dès lors, il est possible de décider une transmission directe entre la station de base et de tels terminaux.

Dans l'art antérieur connu (Zorzi et al (2003) ou Bletsas et al (2006)), il n'est pas pris en compte le fait que dans un système cellulaire les stations de base ont des antennes directives améliorant beaucoup la transmission et la réception des signaux (en concentrant dans une direction donnée l'émission et la réception). Il est donc très probable que les terminaux proches de la station de base aient un gain de canal fort vers la station de base, ne nécessitant donc pas l'utilisation de relais pour aider leur transmission. Ainsi, dans la réalisation de l'invention décrite ci-avant en référence à la figure 2A, il est possible de restreindre déjà l'utilisation de relais pour aider les seuls terminaux qui sont suffisamment éloignés de la station de base (terminal TER1 de la figure 2A), ce qui permet de réduire la charge sur la voie de retour de façon significative. Il est rappelé en effet que dans un système cellulaire, l'entité qui peut prendre les décisions sur l'opération de relais est la station de base. Par conséquent, la station de base doit acquérir des informations liées aux canaux (dites « CSI ») non seulement entre les terminaux, mais en outre entre la station de base elle-même et les terminaux, constituant ainsi une surcharge sur la voie de retour.

En complément ou en variante, il convient de délimiter une zone autour du terminal, ou plus généralement autour d'une entité émettrice ou réceptrice d'un réseau mobile (non nécessairement cellulaire), au-delà de laquelle l'atténuation est telle qu'il est nécessaire d'avoir recours à un relais. Les noeuds relais ou au moins le premier noeud relais (côté terminal) doivent alors être situés dans cette zone.

En effet, dans l'art antérieur connu (Zorzi et al (2003) ou Bletsas et al (2006)), tous les noeuds du système recevant les paquets de signalisation pertinents, pour choisir le meilleur noeud relais, participent au procédé de sélection. Une telle observation peut être faite aussi relativement au document D1 : TAE WON BAE et al (XP031168630). Dans un système cellulaire où une transmission en exploitant des relais est permise, il n'est pas efficace de considérer en tant que relais possibles tous les autres terminaux de la cellule capables de recevoir les paquets de signalisation correspondants (notamment les paquets RTS, CTS, ou autres, décrits plus loin), car cette approche augmente la complexité de la sélection. Pour prendre en compte le gain d'antenne de la station de base, un relais satisfaisant est, de fait, plus proche du terminal (source ou destination) que de la station de base. Par conséquent, ces observations sont avantageusement exploitées au sens de l'invention pour mieux concevoir le procédé de sélection des relais, en réduisant la charge sur la voie de retour et la consommation de ressources radio associée à cette charge.

Ainsi, en termes plus génériques, une réalisation du procédé au sens de l'invention vient surmonter ces problèmes et comporte préférentiellement les étapes :
- déterminer une intersection entre le premier ensemble et un deuxième ensemble de noeuds tels qu'un signal communiqué entre un noeud de ce deuxième ensemble et la deuxième entité parmi lesdites entités émettrice et réceptrice subit une atténuation inférieure à un seuil correspondant à une atténuation de signal entre l'entité émettrice et l'entité réceptrice, et
- limiter la sélection de noeuds en tant que candidats possibles pour relayer le signal de communication aux noeuds de ladite intersection.

On comprend donc, en reprenant une représentation par zones d'atténuation comme illustré sur la figure 2B, que les noeuds situés au-delà d'une zone d'intersection RI entre les deux zones d'atténuation de rayons respectifs R2 (qui est fonction croissante du premier seuil précité) et RIS (qui est fonction de l'atténuation entre les entités émettrice et réceptrice TER et BS) ne sont pas candidats, au moins pour être premier relais (côté entité émettrice ou réceptrice), et peuvent donc être éliminés d'une présélection, ce qui évite une surcharge du réseau.

Dans les exemples des figures 2A et 2B, on considère, à titre simplement illustratif, que l'atténuation d'un signal communiqué entre deux entités (par exemple entre la station de base BS et le terminal TER dans la figure 2B) est fonction croissante de la distance (dans le même exemple la distance RIS) séparant ces deux entités. Les zones représentées sur ces figures peuvent alors avoir approximativement la forme de disques de rayons fonctions de l'atténuation. Les figures 2A et 2B et la détermination de ces zones sont décrites en détail ci-après.

Dans une situation de relais entre plusieurs entités (dite de multi-sauts ou « multi-hop » en anglais), il est possible d'étendre les étapes du procédé de proche en proche pour définir une succession de zones d'intersection depuis la première entité (qui est alors un noeud source) jusqu'à la deuxième entité (qui est alors un noeud destination).

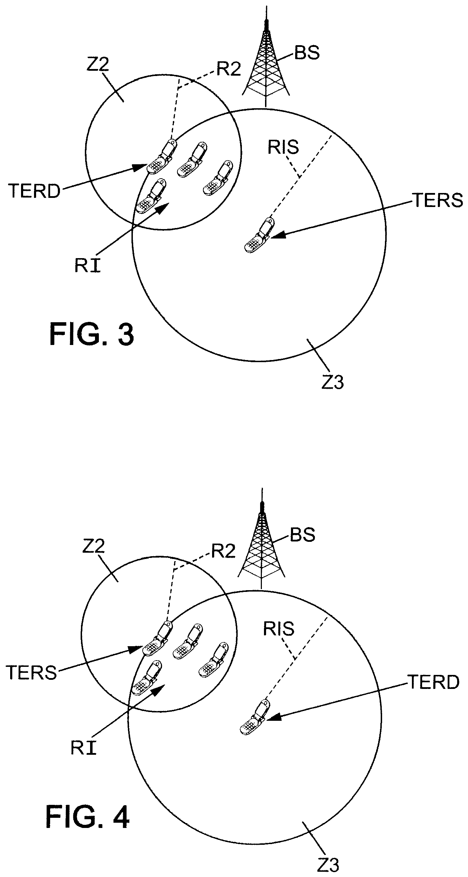

Dans une mise en oeuvre de l'invention où le réseau mobile est un réseau cellulaire comportant des stations de base servant des terminaux dans des cellules du réseau et les noeuds relais étant choisis parmi ces terminaux, la première entité et la deuxième entité précitées sont des terminaux. En particulier, l'une des entités émettrice et réceptrice précitées est définie comme première entité si un signal communiqué entre cette entité et la station de base subit une atténuation moindre qu'un signal communiqué entre l'autre entité et la station de base. Cette caractéristique peut s'illustrer sur les figures 3 et 4 par le fait que la première entité est plus proche de la station de base que la deuxième entité. Ce choix est justifié en détail dans les exemples de réalisation décrits ci-après. Bien entendu, cette situation s'applique aussi bien pour une situation de multi-sauts, avec une transmission du signal de communication via plusieurs noeuds relais que pour une communication entre deux terminaux sans situation de multi-sauts, mais simplement via un seul relais.

Dans les cas où il est recouru à un premier relais (côté station de base ou côté terminal qui émet ou à qui est destiné le signal de communication de données), la première entité précitée est le terminal et la deuxième entité est la station de base, aussi bien en voie descendante (downlink) qu'en voie montante (uplink), comme on le verra dans les exemples de réalisation détaillés ci-après.

Ainsi, en termes plus génériques, la première entité est un terminal et la deuxième entité est une station de base, à la fois dans les deux cas où :
- le signal de communication de données est transmis depuis la station de base et à destination du terminal, et
- le signal de communication de données est transmis depuis le terminal et à destination de la station de base.

Comme indiqué précédemment, dans une réalisation, on délimite (en complément ou en variante d'une délimitation d'une zone d'intersection) une zone autour de la station de base pour déterminer, déjà, s'il est nécessaire ou non d'avoir recours à un relais pour servir un terminal en voie montante ou en voie descendante.

Ainsi, en termes plus génériques, le procédé comporte, dans cette réalisation, les étapes :
- déterminer une atténuation que subit un signal communiqué entre le terminal et la station de base, et
- si l'atténuation dudit signal entre le terminal et la station de base est inférieure à un deuxième seuil prédéterminé, décider une transmission directe du signal de communication entre la station de base et le terminal, sans avoir recours à un relais.

Le premier seuil et/ou le deuxième seuil sont préférentiellement inférieurs à l'atténuation que subit un signal communiqué directement entre les entités émettrice et réceptrice. En effet, pour être avantageuse, la limitation des noeuds candidats pour le relais est préférentiellement déterminée relativement à des zones moins étendues que la distance entre les entités émettrice et réceptrice (par exemple des disques de rayons R1 (figure 2A) et R2 (figure 2B), par rapport à la distance RIS).

En pratique, les premier et deuxième seuils précités peuvent être déterminés par simulations préalables et/ou par mesures sur le réseau. Ils peuvent être fonctions par exemple d'un nombre de terminaux par cellule (fonctions décroissantes), et/ou d'une interférence entre cellules (fonctions croissantes). L'interférence intercellulaire dépend typiquement de la puissance de transmission de cellules autour de la cellule considérée, de la dimension de la cellule considérée et du nombre de cellules réparties autour de la cellule considérée. A titre d'exemple purement illustratif, on considère une cellule de 1000 m de rayon et dans laquelle se situent trente terminaux. Cette cellule est entourée de 18 cellules dans son voisinage avec une puissance de transmission identique de 60W pour toutes les stations de base de ces cellules. Dans l'exemple, ces stations de base sont équipées d'antennes omnidirectionnelles dont le gain d'antenne est de 9dB. Dans cet exemple, les choix suivants ont alors donné des résultats satisfaisants :
- un premier seuil d'atténuation tel que le rayon R2 de la zone Z2 de la figure 2B est de 500 m et
- un deuxième seuil d'atténuation tel que le rayon R1 de la zone Z1 de la figure 2A est de 500 m.

Préférentiellement, pour sélectionner le meilleur relais parmi les noeuds candidats, les terminaux remontent aux stations de base servant leur cellule une information sur un gain de canal (avec les autres terminaux de la cellule et/ou avec la station de base), et/ou une information sur une interférence intercellulaire et bruit. La station de base décide alors de fixer au moins un terminal en tant que noeud relais, parmi les noeuds de l'intersection d'ensembles précitée, en fonction des informations que remontent les terminaux.

Dans une réalisation avantageuse, la station de base détermine un sous-ensemble comportant au moins un terminal en tant que noeud relais fournissant un optimum en gain de capacité de transmission, estimé en fonction des informations que remontent les terminaux. On entend par « capacité de la transmission », le débit offert pour la transmission, ou la qualité de service que procure la transmission, ou encore son rapport signal à bruit, ou tout autre critère mesurant la qualité de la transmission utilisant les relais choisis.

Cette réalisation, bien qu'avantageuse, admet néanmoins des variantes. Par exemple, on peut avoir recours à tous les terminaux à la fois de l'intersection d'ensembles (correspondant à la zone RI de la figure 2B) pour jouer le rôle de relais. Dans ce cas, les relais peuvent opérer en fonctionnement synchronisé, en s'appuyant par exemple sur des codes spatiotemporels distribués ou sur une formation adéquate de faisceaux distribués (technique dite de « beamforming »), comme on le verra plus loin.

Plus généralement, pour déterminer les relais potentiels dans un réseau mobile (cellulaire ou non), les noeuds du réseau transmettent préférentiellement, à l'entité émettrice et/ou à l'entité réceptrice, un signal test contenant une information permettant de déduire une atténuation de signal respectivement vers l'entité émettrice et/ou vers l'entité réceptrice. Ce signal test peut contenir par exemple des paquets de type RTS pour « Ready-To-Send », ou CTS pour « Clear-To-Send », comme on le verra plus loin.

Le calcul du premier et/ou du deuxième seuil, le traitement des informations d'atténuation que communiquent les noeuds et la détermination des noeuds candidats peut faire l'objet d'un programme informatique. A ce titre, la présente invention vise aussi un programme informatique comportant des instructions pour la mise en oeuvre du procédé ci-avant, lorsque ce programme est exécuté par un processeur.

Un tel programme peut être installé par exemple en mémoire d'une station de base d'un réseau cellulaire, ou encore en mémoire des terminaux pour déterminer les relais candidats autour d'eux.

La présente invention vise aussi une station de base d'un réseau cellulaire, comportant des moyens de sélection d'au moins un noeud dynamique du réseau, en tant que candidat pour relayer un signal de communication de données entre la station de base et un terminal du réseau. Ces moyens de sélection sont alors agencés pour :
- déterminer au moins un premier ensemble de terminaux tels qu'un signal communiqué entre la station de base et un terminal du premier ensemble subit une atténuation inférieure à un premier seuil prédéterminé, et
- limiter la sélection de terminaux en tant que candidats possibles pour relayer le signal de communication en fonction du contenu dudit premier ensemble.

Ce premier seuil peut être, par exemple, pour la station de base, le seuil en-dessous duquel il est décidé une transmission directe, sans avoir recours à un relais.

La présente invention vise aussi un terminal destiné à émettre/recevoir un signal de communication de données dans un réseau mobile, comportant des moyens de sélection d'au moins un noeud dynamique du réseau, en tant que candidat pour relayer le signal de communication de données entre le terminal et une entité du réseau. Ces moyens de sélection sont agencés pour :
- déterminer au moins un premier ensemble de noeuds du réseau tels qu'un signal communiqué entre le terminal et un noeud du premier ensemble subit une atténuation inférieure à un premier seuil prédéterminé, et
- limiter la sélection de noeuds en tant que candidats possibles pour relayer le signal de communication en fonction du contenu dudit premier ensemble.

Ce premier seuil peut être par exemple, pour le terminal, l'un des seuils permettant de déterminer l'intersection d'ensembles précitée, dans laquelle se trouvent les noeuds candidats pour le relais.

Bien entendu, les moyens de sélection précités des noeuds dynamiques en tant que candidats pour relayer un signal entre le terminal et la station de base peuvent être partagés entre la station de base et le terminal (le terminal procédant par exemple au moins à la détermination de l'atténuation autour de lui et la station de base procédant aussi au moins à la détermination de l'atténuation autour d'elle). La présente invention vise alors un système comportant au moins un terminal et une station de base, destiné à un réseau cellulaire et comportant globalement de tels moyens de sélection, agencés pour :
- déterminer au moins un premier ensemble de noeuds du réseau tels qu'un signal communiqué entre un noeud du premier ensemble et au moins une entité parmi le terminal et la station de base subit une atténuation inférieure à un premier seuil prédéterminé, et
- limiter la sélection de noeuds en tant que candidats possibles pour relayer le signal de communication en fonction du contenu dudit premier ensemble.

D'autres caractéristiques et avantages de l'invention apparaîtront à l'examen de la description détaillée ci-après, et des dessins annexés sur lesquels :
- la figure 1 illustre un réseau cellulaire avec des terminaux intervenant comme relais ;
- la figure 2A illustre schématiquement une situation où une transmission directe est décidée (entre la station de base BS et le terminal TER2) et une situation où le recours à un relais est préféré (entre le terminal TER1 et la station de base BS) ;
- la figure 2B illustre schématiquement une zone comportant des relais candidats possibles dans un réseau cellulaire pour une communication entre une station de base et un terminal ;
- la figure 3 illustre schématiquement une zone comportant des relais candidats possibles dans un réseau cellulaire pour une communication entre deux terminaux ;
- la figure 4 illustre schématiquement une zone comportant des relais candidats possibles dans un réseau cellulaire pour une communication entre deux terminaux, avec un terminal différent plus près de la station de base par rapport à la figure 3 ;
- la figure 5 est un organigramme (qui peut illustrer l'algorithme général d'un programme d'ordinateur au sens de l'invention dans un exemple de réalisation) des étapes d'une transmission en voie descendante selon un ordonnancement de type « round robin » ;
- la figure 6 est un organigramme (qui peut illustrer l'algorithme général d'un programme d'ordinateur au sens de l'invention dans un exemple de réalisation) des étapes d'une transmission en voie montante selon un ordonnancement de type « round robin » ;
- la figure 7 est un organigramme (qui peut illustrer l'algorithme général d'un programme d'ordinateur au sens de l'invention dans un exemple de réalisation) des étapes d'une transmission en voie descendante selon un ordonnancement à maximisation du rapport signal à bruit ; et

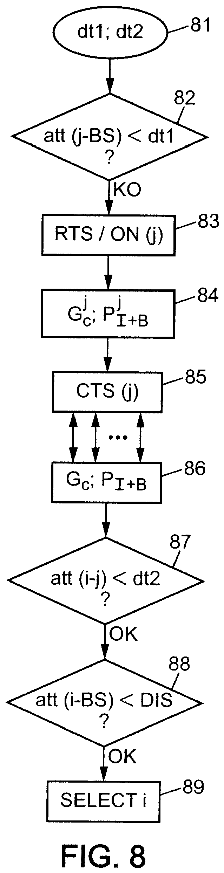

- la figure 8 est un organigramme (qui peut illustrer l'algorithme général d'un programme d'ordinateur au sens de l'invention dans un exemple de réalisation) des étapes d'une transmission en voie montante selon un ordonnancement à maximisation du rapport signal à bruit.

On décrit ci-après à titre d'exemple une mise en oeuvre de l'invention dans un réseau cellulaire, permettant d'organiser des communications coopératives dynamiques (en définissant des relais assurés par des terminaux), en particulier en minimisant la charge sur la voie de retour et la complexité associées à la sélection des meilleurs noeuds relais.

Pour la transmission vers un terminal ou issue d'un terminal, le nombre de relais potentiels est limité grâce à la mise en oeuvre de l'invention, et, par conséquent, la charge sur la voie de retour est avantageusement limitée.

Dans l'exemple de réalisation, les terminaux de la cellule peuvent déterminer l'atténuation des signaux communiqués avec la source et avec la destination. On entend par « signaux communiqués », les signaux émis par les terminaux et reçus par la source ou la destination, ainsi que les signaux reçus par les terminaux et issus de la source ou de la destination.

Lorsque les stations de base ont des antennes directives qui améliorent la transmission et la réception des signaux, il n'est pas utile de relayer des signaux depuis ou vers un terminal qui est proche de la station de base. Ainsi, si l'atténuation (qui est fonction de la distance et de l'effet de masque) d'un terminal à la station de base est inférieure à un seuil, le système est conformé pour ne pas avoir recours à un noeud relais car il est très probable que la transmission directe atteindrait une meilleure capacité.

Pour la même raison, quand un terminal est suffisamment éloigné de la station de base, le lien relais-terminal est probablement plus faible que le lien station de base-relais, en raison du gain d'antenne de la station de base. Il est donc plus probable d'identifier un bon relais plus proche du terminal que de la station de base. Ainsi, on considère comme relais potentiels les terminaux pour lesquels l'atténuation vers le terminal source (en voie montante) ou destination (en voie descendante) est inférieure à un autre seuil (ce qui revient à considérer les terminaux à l'intérieur d'un disque de couverture centré sur le terminal source ou destination selon le mode « uplink » ou « downlink », comme on le verra en référence aux figures ci-après). De plus, à l'intérieur de ce disque, des noeuds peuvent être plus éloignés de la station de base que le terminal source ou destination. Il est peu probable que ces noeuds soient alors capables d'améliorer la transmission depuis ou vers le terminal cible, en tant que relais, car leur atténuation vers la station de base est supérieure à celle du terminal cible. Par conséquent, seuls les noeuds à l'intérieur du disque et qui sont plus proches de la station de base que le terminal à servir peuvent être sélectionnés, ce qui peut encore réduire la charge sur la voie de retour.

On décrit ci-après des modes de réalisation pour déterminer la sélection des relais potentiels parmi tous les noeuds du réseau, pour améliorer la communication entre la station de base et le terminal à servir.

En voie descendante, le noeud source est la station de base BS (entité émettrice) et le noeud destination est le terminal TER à servir dans la cellule (entité réceptrice). On définit préférentiellement deux seuils d'atténuation.

En référence à la figure 2A, un seuil dt1 est associé à l'atténuation d'un signal communiqué entre la source BS et le terminal à servir, définissant alors une région Z1 de transmission directe (sans relai) entre la station de base et un terminal TER2 qui serait situé dans cette région Z1. Cette région Z1 correspond (en première approximation et à titre illustratif sur la figure 2A) à un disque dont le centre est la source (station de base BS) et le rayon R1 est fonction croissante du seuil dt1 : plus le seuil choisi est grand et plus le rayon de cette zone Z1 est grand. Il s'agit toutefois d'une approximation car l'atténuation dépend certes de la distance (du fait des pertes de propagation ou « pathloss » s'exprimant, en décibels, selon une fonction linéaire du logarithme de la distance), mais aussi des effets de masque (« shadowing »).

La représentation par des disques des ensembles de terminaux à considérer dans les figures 2A et 2B n'est donc donnée qu'à titre explicatif, pour la clarté de l'exposé. Dans une réalisation préférée, la mise en oeuvre pratique de l'invention se fonde essentiellement sur des mesures d'atténuations sans prendre en compte particulièrement la position des terminaux par rapport aux zones Z1 à Z3 représentées sur les figures.

Dans l'exemple représenté sur la figure 2A, le terminal TER2 est directement servi par la station de base BS, sans avoir recours à un relais. En revanche, le recours à au moins un relais est préféré pour servir le terminal TER1 qui se situe en dehors de la zone Z1, c'est-à-dire qu'un signal communiqué entre la station de base et le terminal TER1 subit une atténuation supérieure au seuil dt1.

En référence maintenant à la figure 2B, un autre seuil dt2 est associé à l'atténuation vers la destination TER et définit alors une région Z2 de transmission possible entre le terminal TER et un autre terminal qui peut jouer le rôle de relais s'il est situé dans cette région Z2. Cette région Z2 correspond (en première approximation et à titre illustratif sur la figure 2B) à un disque dont le centre est la destination (terminal TER) et le rayon R2 est fonction croissante du seuil dt2.

On détermine en outre l'atténuation d'un signal entre la source BS et la destination TER. Cette atténuation est fonction de la distance RIS entre la station de base BS et le terminal TER, correspondant au rayon du disque Z3 représenté sur les figures 2A, 2B, 3 et 4. Un noeud devient candidat pour le relais d'une communication vers le terminal TER, si :
- déjà, l'atténuation de signal entre la station de base BS et le terminal TER est supérieure au seuil dt1 ; sinon, aucun relais n'est nécessaire,
- si l'atténuation de signal entre le noeud examiné et la destination TER est inférieure au seuil dt2, et
- si l'atténuation de signal entre le noeud examiné et la source est inférieure à l'atténuation de signal entre la destination et la source ; l'atténuation de signal entre la destination et la source est notée ci-après DIS.

Ainsi, si le terminal TER à servir n'est pas dans la zone Z1 (et qu'un relais est alors nécessaire), les terminaux candidats pour le relais sont choisis dans la zone d'intersection RI de la figure 2B.

Pour l'opération de relais proprement dite, on peut prévoir que tous ou partie des noeuds devenant candidats pour le relais soient utilisés pour relayer le signal entre le terminal et la destination. Si plus de deux terminaux sont utilisés pour le relais en même temps, on opère préférentiellement de manière synchronisée (par exemple avec des codes spatiotemporels distribués ou par formation adéquate de faisceaux distribués selon une technique de « beamforming »).

Dans une variante avantageuse, on peut éviter l'utilisation de codes spatiotemporels ou de beamforming et prévoir que les noeuds de la présélection soient utilisés un à un, individuellement. Le terminal choisi pour le relais, dans cette réalisation, est celui qui apporte le meilleur gain de performance selon un critère considéré (capacité de transmission par exemple). En effet, les noeuds candidats peuvent remonter à la station de base leur gain de canal avec le terminal source et leur puissance d'interférence intercellulaire reçue plus bruit. Puis, la station de base calcule le gain de performance que peut permettre d'atteindre chaque terminal en effectuant le relais et choisit finalement le noeud relais qui apporte le meilleur gain. Un critère de performance qui peut être choisi est la capacité de transmission. Par exemple, un noeud candidat est finalement choisi si le gain en capacité avec le relais qu'il effectue est meilleur que le gain d'une transmission directe (sans relais).

On décrit ci-après la présélection des relais en voie montante (ou « uplink »). Le noeud source est maintenant le terminal TER à servir et le noeud destination est la station de base BS.

Ici encore, un noeud devient candidat pour le relais :
- déjà si un relais est nécessaire (donc si le terminal n'est pas dans la zone Z1),
- si l'atténuation de signal du noeud examiné vers la source TER est inférieure au seuil dt2 (c'est-à-dire si le noeud examiné se trouve dans la zone Z2 de la figure 2B) et
- si l'atténuation de signal du noeud examiné vers la destination est inférieure à l'atténuation de la source vers la destination (c'est-à-dire si le noeud examiné se trouve dans la zone Z3 comme représenté sur la figure 2B).

Finalement, un relais n'est nécessaire que si le terminal TER est hors de la zone Z1 autour de la station de base BS, et un terminal candidat pour le relais, dans ce cas, est dans la région d'intersection RI entre la zone Z2 et la zone Z3.

Pour le relais, deux options peuvent encore être choisies. Tous ou partie des noeuds candidats pour le relais peuvent être utilisés pour relayer des signaux vers la destination, de manière synchronisée (avec des codes spatiotemporels distribués ou par beamforming distribué).

En variante, le terminal finalement choisi en tant que relais est celui qui apporte le meilleur gain de performance. Les noeuds candidats remontent à la station de base leur gain de canal avec le terminal source et leur puissance d'interférence intercellulaire reçue (plus bruit). La station de base calcule ensuite le gain de performance apporté par chaque relais candidat. La station de base choisit en priorité le noeud qui apporte le meilleur gain de performance pour le relais.

On se réfère maintenant à la figure 3 pour décrire le cas d'une communication entre deux terminaux (« device-to-device communication » en anglais), notamment (mais non nécessairement) en situation de multi-sauts. Le noeud source TERS et le noeud destination TERD sont des terminaux. Le procédé décrit ci-dessous détermine la présélection des relais potentiels parmi tous les noeuds du réseau existants, entre ces deux terminaux TERS et TERD.

Les terminaux qui sont plus près de la station de base BS reçoivent moins d'interférence intercellulaire et peuvent donc apporter plus de gain de performance s'ils relayent des signaux. On distingue deux cas, en comparant :
- l'atténuation que subit un signal communiqué entre la station de base BS et le terminal source TERS, et
- l'atténuation que subit un signal communiqué entre la station de base BS et le terminal destination TERD.

Dans un premier cas illustré sur la figure 3, l'atténuation entre la station de base BS et la destination TERD est plus petite que l'atténuation entre la station de base BS et la source TERS. Cette situation s'illustre sur la figure 3 par le fait que la destination TERD est plus proche de la station de base, donc est plus au centre de la cellule que la source. La destination TERD reçoit donc moins d'interférence intercellulaire moyenne que la source TERS. On définit dans ce cas un premier disque Z2 dont le centre est la destination TERD et le rayon R2 est fonction du seuil dt2 (seuil d'atténuation d'un signal communiqué entre un noeud considéré et la destination TERD). On définit aussi un deuxième disque Z3 dont le centre est la source TERS et le rayon RIS est fonction du seuil DIS (atténuation entre la source et la destination). Les noeuds candidats pour le relais se situent dans la région d'intersection RI entre ces deux zones Z2 et Z3.

Dans un deuxième cas illustré sur la figure 4, l'atténuation entre la station de base BS et la source TERS est plus petite que l'atténuation entre la station de base BS et la destination TERD. A l'inverse du cas précédent, la source TERS est plus proche du centre de la cellule que la destination TERD et reçoit moins d'interférence intercellulaire moyenne que la destination. Les positions des terminaux TERS et TERD sont simplement à considérer comme inversées entre la figure 3 et la figure 4. On définit dans ce second cas un premier disque Z2 dont le centre est la source TERS et le rayon R2 est fonction du seuil dt2 (seuil d'atténuation d'un signal communiqué entre un noeud considéré et la source TERS). On définit aussi un deuxième disque Z3 dont le centre est la destination TERD et le rayon RIS est fonction du seuil DIS (atténuation entre la source et la destination). Les noeuds candidats pour le relais se situent dans la région d'intersection RI entre ces deux zones Z2 et Z3.

Ainsi, un noeud devient candidat pour l'opération de relais si son atténuation vers le noeud le plus proche au centre de la cellule (source (figure 4) ou destination (figure 3)) est inférieure au seuil dt2 (ce qui signifie en d'autres termes que ce noeud est dans le disque Z2 de rayon R2 fonction du seuil dt2) et si son atténuation vers la source (figure 3) ou vers la destination (figure 4) est inférieure à l'atténuation de la source vers la destination DIS (ce qui signifie en d'autres termes qu'il est aussi dans le disque Z3 de rayon RIS fonction du seuil DIS).

Ici encore, on peut choisir deux options pour le choix final des relais. Dans une première option, les noeuds candidats pour le relais peuvent tous être utilisés pour relayer des signaux vers la destination, de manière synchronisée. Dans une deuxième option, on choisit d'abord le noeud candidat qui apporte le meilleur gain de performance, selon un critère donné, pour relayer le signal émis par la source, les noeuds candidats remontant leurs gains de canal et leur puissance d'interférence intercellulaire reçue (plus bruit) à la station de base.

Les procédés décrits ci-dessus concernent la transmission entre une source et une destination en deux sauts. Néanmoins, plus de deux sauts peuvent être prévus dans un réseau cellulaire (en communication « multi-sauts »).

On peut envisager alors les options suivantes en communication « multi-sauts » :
- une transmission en voie descendante (downlink) pour le premier saut (de la station de base BS vers un relais) et une transmission de terminal à terminal aidée par au moins un relais (donc par au moins deux autres sauts) comme illustré sur la figure 4 ;
- une transmission de terminal à terminal aidée par au moins un relais (donc par au moins deux premiers sauts) comme illustré à la figure 3, suivi d'une transmission en voie montante (uplink) (donc par un saut supplémentaire d'un relais vers la station de base BS) ;
- une transmission entre deux terminaux en utilisant plusieurs relais comme illustré sur l'une des figures 3 et 4.

On décrit ci-après deux exemples de mise en oeuvre et applications de l'invention. Bien entendu, un mélange des deux mises en oeuvre décrites pourra être implémenté.

On suppose ci-après que les décisions d'ordonnancement ont déjà été prises (souvent par la station de base) et en particulier qu'un terminal est déjà choisi pour transmettre ou recevoir des données. On suppose ici que tous les terminaux sont servis à tour de rôle (ordonnancement selon un algorithme de type dit « Round-Robin »). Dans un ordonnancement de ce type, chaque terminal est servi à tour de rôle ; ce qui peut s'effectuer par exemple de la manière suivante : chaque terminal est identifié par un numéro unique et chaque station de base forme une liste des terminaux à servir dans sa zone de couverture, cette liste étant rangée par exemple dans l'ordre croissant des numéros des terminaux (cette règle pouvant être prédéfinie dans le paramétrage de la station de base).

On considère dans l'exemple décrit ci-après la situation d'un signal transmis par voie descendante (en mode downlink), la station de base s'apprêtant à servir un terminal particulier d'indice i en utilisant potentiellement un seul relais, dans l'exemple décrit.

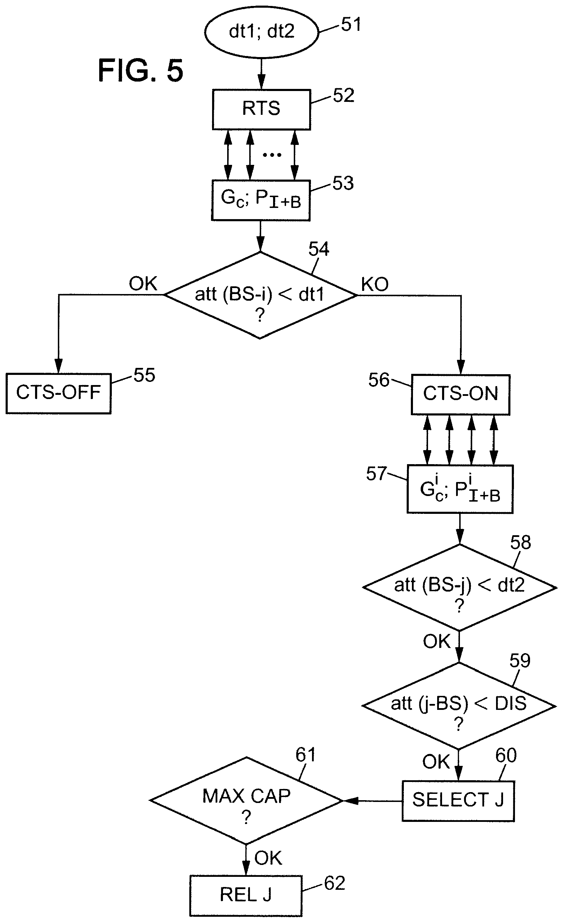

En référence à la figure 5 définissant les principales étapes du procédé, on prédéfinit (par simulation et/ou par mesures dans la cellule) le seuil dt1 d'atténuation autour de la station de base et le seuil dt2 d'atténuation autour du terminal destination (étape 51).

A l'étape 52, la station de base émet un paquet RTS (« Ready-To-Send » en anglais). Ce paquet RTS contient des symboles pilotes.

Les terminaux de la cellule entendent le paquet RTS et estiment le gain de leur canal vers la station de base à l'aide des symboles pilotes. Dans un exemple de réalisation, les terminaux déduisent du gain du canal l'atténuation correspondante. Par exemple, l'atténuation peut être calculée par l'inverse du gain du canal (et tient alors compte de l'évanouissement rapide de canal ou « fast fading »). Si l'on souhaite s'affranchir des variations rapides du fast fading pour une estimation fiable de l'atténuation, on peut par exemple calculer l'atténuation par une moyenne de l'inverse du gain courant et de valeurs d'inverse de gain précédemment obtenues et stockées en mémoire du terminal (si celles-ci sont disponibles bien entendu). De plus, les terminaux estiment la puissance d'interférence intercellulaire reçue plus la puissance du bruit (étape 53).

Si l'atténuation entre la station de base BS et la destination (terminal *i*) est plus grande que le seuil dt1 (flèche KO en sortie du test 54), la destination *i* investigue les noeuds susceptibles d'aider la transmission en tant que relais. Sinon, la transmission est directe (flèche OK) à l'étape 55. Le terminal *i* transmet dans ce dernier cas un paquet CTS/OFF ("clear-to-send" et « relais désactivé » : "OFF") : ce paquet signifie pour la station de base que le terminal i recevra des données directement de la station de base.

En cas de non transmission directe, le terminal *i* transmet un paquet CTS/ON (« clear-to-send », avec relais actif « ON ») qui contient son atténuation à la station de base et des symboles pilotes (étape 56). Les terminaux qui peuvent « entendre » le paquet CTS/ON estiment le gain de leur canal vers la destination *i* et leur puissance d'interférence intercellulaire reçue plus la puissance du bruit (étape 57).

Pour tous les terminaux *j* qui ont reçu le paquet CTS/ON:
- si l'atténuation d'un terminal *j* vers la destination *i* est inférieure au seuil dt2 (flèche OK en sortie du test 58), et
- si l'atténuation du même terminal *j* vers la station de base est inférieure à l'atténuation DIS de la destination *i* à la station de base (flèche OK en sortie du test 59),
ce terminal devient un relais potentiel (étape 60).

On précise qu'un paquet RTS ou CTS désigne un ensemble de symboles, qui peuvent être inclus dans un paquet radio plus large, comme par exemple une sous-trame de la norme 3GPP LTE.

Le relais potentiel remonte à la station de base son gain du canal à la destination et sa puissance de bruit et d'interférence intercellulaire reçue.

La destination *i* remonte à la station de base son gain du canal vers la station de base et sa puissance de bruit et d'interférence intercellulaire reçue.

La station de base choisit (étape 62) le meilleur relais parmi les noeuds qui ont remonté leurs gains de canal vers la destination (noeuds relais potentiels). Le meilleur relais est celui qui maximise la capacité (test 61) selon le protocole de transmission employé.

Le relais choisi est utilisé si la capacité avec relais est supérieure à la capacité de transmission directe. Dans ce cas, le relais choisi est informé par un paquet drapeau (« flag packet » en anglais).

La station de base transmet des données au terminal *i* et le relais choisi aide de façon satisfaisante la transmission.

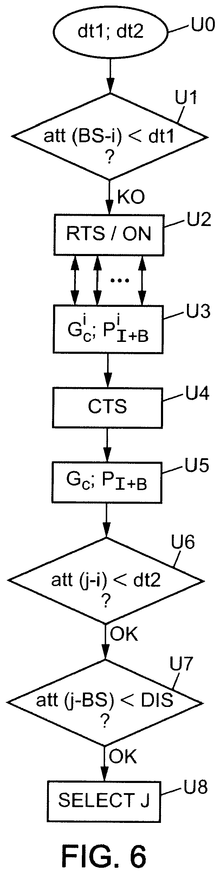

En référence à la figure 6, en voie montante (uplink), un terminal source *i* cherche à transmettre des données à la station de base (en considérant en effet que le terminal *i* a été choisi pour transmettre des données à la station de base).

On définit un premier seuil d'atténuation dt1 (atténuation à la station de base) et un deuxième seuil d'atténuation dt2 (atténuation au terminal source), à l'étape U1.

Si l'atténuation entre le terminal *i* et la station de base est plus grande que le premier seuil dt1 (flèche KO en sortie du test U1), le terminal *i* investigue des noeuds relais potentiels qui peuvent aider la transmission.

Le terminal *i* transmet un paquet RTS/ON (« ready-to-send » et relais « ON ») qui contient son atténuation à la station de base et des symboles pilotes (étape U2).

Les terminaux de la cellule qui reçoivent le paquet RTS/ON estiment le gain de leur canal vers le terminal *i,* ainsi que leur puissance de bruit et d'interférence intercellulaire reçue (étape U3).

La station de base transmet un paquet CTS (« clear-to-send ») qui contient des symboles pilotes (étape U4).

Les terminaux de la cellule (la source *i* incluse) reçoivent le paquet CTS, et estiment le gain de leur canal à la station de base, l'atténuation correspondante, ainsi que leur puissance de bruit et d'interférence intercellulaire reçue (étape U5).

Pour tous les terminaux qui ont entendu le paquet RTS/ON, si l'atténuation d'un terminal vers la source *i* est inférieure au deuxième seuil dt2 (test U6) et si l'atténuation du même terminal à la station de base est inférieure à l'atténuation de la source *i* à la station de base (test U7), ce terminal devient un relais potentiel (étape U8).

Comme décrit précédemment en référence à la figure 5, le relais potentiel remonte à la station de base le gain de son canal, maintenant vers la source *i,* ainsi que sa puissance de bruit et d'interférence intercellulaire reçue. La source *i* remonte le gain de son canal vers la station de base et sa puissance de bruit et d'interférence intercellulaire à la station de base. La station de base choisit le meilleur relais pour la source *i* parmi les noeuds qui ont remonté le gain de leurs canaux. Le meilleur relais est celui qui maximise la capacité de la transmission selon le protocole de transmission employé.

Un relais est sélectionné si la capacité qu'il procure en effectuant le relais est supérieure à la capacité de la transmission directe. Dans ce cas, le relais choisi est informé par un paquet drapeau (« flag packet » en anglais). La source transmet des données et le relais choisi aide la transmission.

A nouveau, si l'atténuation entre le terminal *i* et la station de base est plus petite que le premier seuil dt1, la source ne recherche pas de noeud relais potentiel pour aider la transmission, car la source est alors suffisamment proche de la station de base. Le terminal *i* transmet un paquet RTS/OFF ("ready-to-send" et relayage OFF) pour signifier à la station de base que le terminal *i* transmettra les données directement à la station de base.

On décrit ci-après une autre application de l'invention avec un algorithme d'ordonnancement différent correspondant à l'ordonnancement dit « max-SNR » (maximisation du rapport signal sur bruit). Ici, le terminal servi à chaque durée « TTI » est celui qui a la meilleure qualité de canal.

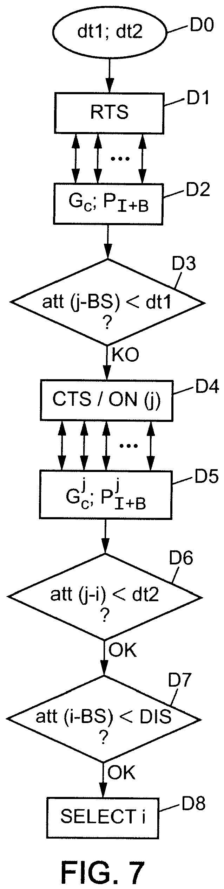

En référence à la figure 7, en voie descendante (downlink), on définit un premier seuil d'atténuation dt1 (atténuation à la station de base) et un deuxième seuil d'atténuation dt2 (atténuation au terminal destination) (étape D0). La station de base transmet (en mode diffusion ou « broadcast ») un paquet RTS (« ready-to-send » en anglais) destiné à chaque terminal *j* de la cellule, ce paquet contenant des symboles pilotes (étape D1). Chaque terminal *j* de la cellule entend le paquet RTS et estime le gain de son canal vers la station de base, ainsi que l'atténuation correspondante. De plus, chaque terminal estime sa puissance de bruit et d'interférence intercellulaire (étape D2).

Pour chaque terminal *j,* si l'atténuation entre la station de base et le terminal *j* est plus grande que le premier seuil dt1 (flèche KO en sortie du test D3), le terminal *j* recherche des noeuds relais potentiels susceptibles de relayer la transmission. Le terminal *j* transmet un paquet CTS/ON(j) (clear-to-send et relais ON) contenant son atténuation vers la station de base et des symboles pilotes (étape D4). Les terminaux de la cellule qui peuvent recevoir le paquet CTS/ON du terminal *j* estiment le gain de leur canal vers le terminal *j* et leur puissance d'interférence intercellulaire reçue plus bruit (étape D5). Pour tous les terminaux qui ont reçu le paquet CTS/ON(j) :
- si l'atténuation d'un terminal vers le terminal j est inférieure au deuxième seuil dt2 (test D6) et
- si l'atténuation du même terminal à la station de base est inférieure à l'atténuation de la destination à la station de base (test D7),
ce terminal devient un relais potentiel (étape D8).

Le relais potentiel pour le terminal *j* remonte à la station de base son gain du canal à la destination et sa puissance d'interférence intercellulaire reçue plus bruit. Le terminal *j* remonte à la station de base son gain du canal vers la station de base et sa puissance d'interférence intercellulaire reçue plus bruit. La station de base choisit le meilleur relais parmi les noeuds qui ont remontés leur gain de canal vers le terminal *j.* Le meilleur relais pour les terminaux *j* est celui qui maximise la capacité.

La station de base calcule la capacité des terminaux *j* en tenant compte de leurs relais potentiels notés « *i* ». Si une capacité obtenue grâce à l'opération de relais pour un terminal *j* donné est supérieure à la capacité de la transmission directe (entre la station de base et le terminal à servir), alors la capacité avec relais est considérée pour ce terminal *j.* Sinon, la capacité considérée pour le terminal *j* est celle de la transmission directe avec la station de base. Ici, la station de base garde préférentiellement en mémoire la capacité estimée pour chaque terminal *j* (notée C(*j*)).

Si l'atténuation entre la station de base et chaque terminal *j* est plus petite que le premier seuil dt1, le terminal *j* ne cherche pas de noeuds relais susceptibles d'aider la transmission et transmet un paquet CTS/OFF(j) signifiant à la station de base et aux autres noeuds du voisinage que le terminal *j* recevra les données directement de la station de base. La capacité considérée pour le terminal *j* est alors celle de la transmission directe. La station de base garde en mémoire la capacité C(j).

La station de base sert le terminal qui a la meilleure capacité parmi tous les terminaux de la cellule, la transmission étant éventuellement aidée par un relais qui offre une meilleure capacité qu'une transmission directe.

En voie montante (uplink), dans l'algorithme d'ordonnancement max-SNR avec relais, on définit un premier seuil d'atténuation dt1 (atténuation à la station de base) et un deuxième seuil d'atténuation dt2 (atténuation au terminal destination) (étape 81).

Si l'atténuation entre le terminal *j* et la station de base est plus grande que le premier seuil dt1 (flèche KO en sortie du test 82), le terminal *j* recherche des noeuds relais potentiels qui peuvent aider la transmission. Le terminal *j* transmet un paquet RTS/ON(j) contenant son atténuation à la station de base et des symboles pilotes (étape 83). Les terminaux de la cellule qui reçoivent le paquet RTS/ON(j) estiment leur gain de canal vers le terminal *j,* l'atténuation correspondante, ainsi que leur puissance d'interférence intercellulaire reçue plus bruit (étape 84).

La station de base transmet un paquet CTS(j) contenant des symboles pilotes pour chaque terminal *j* (étape 85). Les terminaux de la cellule (terminal *j* inclus) reçoivent le paquet CTS, estiment leur gain de canal à la station de base et leur puissance d'interférence intercellulaire reçue plus bruit (étape 86). Pour tous les terminaux *i* qui ont reçu le paquet RTS/ON(j), si l'atténuation d'un terminal *i* vers le terminal *j* est inférieure au deuxième seuil dt2 (test 87) et si l'atténuation du même terminal *i* à la station de base est inférieure à l'atténuation du terminal *j* à la station de base (test 88), ce terminal devient un relais potentiel (étape 89).

Le relais potentiel pour le terminal *j* remonte à la station de base son gain du canal à la source et aussi sa puissance d'interférence intercellulaire reçue plus bruit. Le terminal *j* remonte son gain du canal vers la station de base et sa puissance d'interférence intercellulaire reçue plus bruit à la station de base. La station de base choisit le meilleur relais pour le terminal *j* parmi les noeuds qui ont remonté leur gain de canal. Le meilleur relais est celui qui permet d'atteindre une capacité maximum selon le protocole de transmission employé. Si une capacité obtenue grâce à l'opération de relais pour le terminal *j* est supérieure à la capacité de la transmission directe, alors la capacité avec relais est considérée pour ce terminal *j.* Sinon, la capacité considérée pour le terminal *j* est celle de la transmission directe. La station de base garde en mémoire la capacité C(j) pour chaque terminal *j.*

La station de base sert le terminal qui a la meilleure capacité parmi tous les terminaux de la cellule, la transmission étant éventuellement aidée par le relai associé au terminal sélectionné.

## Revendications

1. Procédé de sélection d'au moins un noeud dynamique dans un réseau mobile, en tant que candidat pour relayer un signal de communication de données entre une entité émettrice et une entité réceptrice du réseau,
comportant les étapes :
- déterminer au moins un premier ensemble de noeuds du réseau tels qu'un signal communiqué entre un noeud du premier ensemble et au moins une première entité parmi lesdites entités émettrice et réceptrice subit une atténuation inférieure à un premier seuil prédéterminé (dt1 ; dt2 ; DIS),
**caractérisé en ce qu'**il comporte en outre les étapes :
- déterminer une intersection (RI) entre le premier ensemble (Z2) et un deuxième ensemble (Z3) de noeuds tels qu'un signal communiqué entre un noeud du deuxième ensemble et la deuxième entité parmi lesdites entités émettrice et réceptrice subit une atténuation inférieure à un seuil (DIS) correspondant à une atténuation de signal entre l'entité émettrice et l'entité réceptrice, et
- limiter la sélection de noeuds en tant que candidats possibles pour relayer le signal de communication aux noeuds de ladite intersection d'ensembles.

2. Procédé selon la revendication 1, **caractérisé en ce que**, le réseau mobile étant un réseau cellulaire comportant des stations de base servant des terminaux dans des cellules du réseau, la première entité est un terminal (TER) et la deuxième entité est une station de base (BS).

3. Procédé selon la revendication 2, **caractérisé en ce que** la première entité est un terminal et la deuxième entité est une station de base, dans les deux cas où :
- le signal de communication de données est transmis (DL) depuis la station de base et à destination du terminal, et
- le signal de communication de données est transmis (UL) depuis le terminal et à destination de la station de base.

4. Procédé selon l'une des revendications 2 et 3, **caractérisé en ce qu'**il comporte les étapes :
- déterminer une atténuation que subit un signal communiqué entre le terminal et la station de base, et
- si l'atténuation dudit signal entre le terminal et la station de base est inférieure à un deuxième seuil prédéterminé (dtl), décider une transmission directe du signal de communication entre la station de base et le terminal, sans avoir recours à un relais.

5. Procédé selon la revendication 1, **caractérisé en ce que**, le réseau mobile étant un réseau cellulaire comportant des stations de base servant des terminaux dans des cellules du réseau, la première entité et la deuxième entité sont des terminaux (TERS, TERD), et **en ce qu'**un signal communiqué entre la première entité et la station de base subit une atténuation moindre qu'un signal communiqué entre la deuxième entité et la station de base.

6. Procédé selon l'une des revendications précédentes, **caractérisé en ce que** le premier seuil et/ou le deuxième seuil sont choisis inférieurs à une atténuation (DIS) que subit un signal communiqué directement entre les entités émettrice et réceptrice.

7. Procédé selon l'une des revendications 2 à 6, **caractérisé en ce que** les terminaux remontent aux stations de base servant leur cellule une information sur un canal et/ou sur une interférence intercellulaire et bruit,
et **en ce que** la station de base détermine au moins un terminal en tant que noeud relais, parmi les noeuds de l'intersection d'ensembles (RI), en fonction des informations que remontent les terminaux.

8. Procédé selon la revendication 7, **caractérisé en ce que** la station de base détermine un sous-ensemble comportant au moins un terminal en tant que noeud relais fournissant un optimum en gain de capacité de transmission, estimé en fonction desdites informations que remontent les terminaux.

9. Procédé selon l'une des revendications précédentes, **caractérisé en ce que** les noeuds du réseau transmettent, à l'entité émettrice et/ou à l'entité réceptrice, un signal test contenant une information permettant de déduire une atténuation de signal respectivement vers l'entité émettrice et/ou vers l'entité réceptrice.

10. Programme informatique comportant des instructions pour la mise en oeuvre du procédé selon l'une des revendications précédentes, lorsque ce programme est exécuté par un processeur.

11. Station de base d'un réseau cellulaire, comportant des moyens de sélection d'au moins un noeud dynamique du réseau, en tant que candidat pour relayer un signal de communication de données entre la station de base et un terminal cible du réseau, lesdits moyens de sélection étant agencés pour :
- déterminer au moins un premier ensemble de terminaux tels qu'un signal communiqué entre la station de base (BS) et un terminal du premier ensemble subit une atténuation inférieure à un premier seuil prédéterminé (dtl ; DIS),
**caractérisée en ce que** les moyens de sélection sont agencés en outre pour :
- déterminer une intersection (RI) entre le premier ensemble (Z2) et un deuxième ensemble (Z3) de noeuds du réseau tels qu'un signal communiqué entre le terminal cible et un noeud du deuxième ensemble subit une atténuation inférieure à un deuxième seuil prédéterminé (dt2 ; DIS), et
- limiter la sélection de noeuds en tant que candidats possibles pour relayer le signal de communication aux noeuds de ladite intersection d'ensembles.

12. Terminal destiné à émettre/recevoir un signal de communication de données dans un réseau mobile, comportant des moyens de sélection d'au moins un noeud dynamique du réseau, en tant que candidat pour relayer le signal de communication de données entre ledit terminal et une entité cible du réseau, lesdits moyens de sélection étant agencés pour :
- déterminer au moins un premier ensemble de noeuds du réseau tels qu'un signal communiqué entre le terminal et un noeud du premier ensemble subit une atténuation inférieure à un premier seuil prédéterminé (dt2 ; DIS),
**caractérisé en ce que** les moyens de sélection sont agencés en outre pour :
- déterminer une intersection (RI) entre le premier ensemble et un deuxième ensemble de noeuds du réseau tels qu'un signal communiqué entre l'entité cible et un noeud du deuxième ensemble subit une atténuation inférieure à un deuxième seuil prédéterminé (dtl ; DIS), et
- limiter la sélection de noeuds en tant que candidats possibles pour relayer le signal de communication aux noeuds de ladite intersection d'ensembles.

13. Système comportant au moins un terminal et une station de base, destiné à un réseau cellulaire, comportant des moyens de sélection d'au moins un noeud dynamique du réseau, en tant que candidat pour relayer un signal de communication de données entre la station de base et le terminal, lesdits moyens de sélection étant agencés pour :
- déterminer au moins un premier ensemble de noeuds du réseau tels qu'un signal communiqué entre un noeud du premier ensemble et au moins une entité parmi le terminal et la station de base subit une atténuation inférieure à un premier seuil prédéterminé (dtl ; dt2 ; DIS),
**caractérisé en ce que** les moyens de sélection sont agencés en outre pour :
- déterminer une intersection (RI) entre le premier ensemble (Z2) et un deuxième ensemble (Z3) de noeuds tels qu'un signal communiqué entre un noeud du deuxième ensemble et la deuxième entité parmi lesdites entités émettrice et réceptrice subit une atténuation inférieure à un seuil (DIS) correspondant à une atténuation de signal entre l'entité émettrice et l'entité réceptrice, et
- limiter la sélection de noeuds en tant que candidats possibles pour relayer le signal de communication aux noeuds de ladite intersection d'ensembles.

## Patentansprüche

1. Verfahren zur Auswahl von mindestens einem dynamischen Knoten in einem drahtlosen Netz als Kandidat zum Weiterleiten eines Datenkommunikationssignals zwischen einer Sendeeinheit und einer Empfangseinheit des Netzes,
umfassend die folgenden Schritte:
- Bestimmen mindestens einer ersten Menge von Knoten des Netzes derart, dass ein Signal, das zwischen einem Knoten der ersten Menge und mindestens einer ersten Einheit unter den Sende- und Empfangseinheiten übermittelt wird, eine Dämpfung erfährt, die geringer als ein vorgegebener Schwellenwert (dtl; dt2; DIS) ist, **dadurch gekennzeichnet, dass** es darüber hinaus die folgenden Schritte umfasst:
- Bestimmen einer Schnittmenge (RI) zwischen der ersten Menge (Z2) und einer zweiten Menge (Z3) von Knoten derart, dass ein Signal, das zwischen einem Knoten der zweiten Menge und der zweiten Einheit unter den Sende- und Empfangseinheiten übermittelt wird, eine Dämpfung erfährt, die geringer als ein Schwellenwert (DIS) ist, der einer Signaldämpfung zwischen der Sendeeinheit und der Empfangseinheit entspricht, und
- Begrenzen der Auswahl von Knoten als mögliche Kandidaten zum Weiterleiten des Kommunikationssignals auf die Knoten der Schnittmenge.

2. Verfahren nach Anspruch 1, **dadurch gekennzeichnet, dass**, da das drahtlose Netz ein zellulares Netz ist, das Basisstationen umfasst, welche Endgeräte in Zellen des Netzes bedienen, die erste Einheit ein Endgerät (TER) ist und die zweite Einheit eine Basisstation (BS) ist.

3. Verfahren nach Anspruch 2, **dadurch gekennzeichnet, dass** die erste Einheit ein Endgerät ist und die zweite Einheit eine Basisstation ist in den beiden Fällen, in denen:
- das Datenkommunikationssignal von der Basisstation aus zum Endgerät übertragen wird (DL) und
- das Datenkommunikationssignal vom Endgerät aus zur Basisstation übertragen wird (UL).

4. Verfahren nach einem der Ansprüche 2 bis 3, **dadurch gekennzeichnet, dass** es die folgenden Schritte umfasst:
- Bestimmen einer Dämpfung, die ein Signal erfährt, das zwischen dem Endgerät und der Basisstation übermittelt wird, und
- falls die Dämpfung des Signals zwischen dem Endgerät und der Basisstation geringer als ein zweiter vorgegebener Schwellenwert (dt1) ist, Beschließen einer direkten Übertragung des Kommunikationssignals zwischen der Basisstation und dem Endgerät, ohne auf ein Relais zurückzugreifen.

5. Verfahren nach Anspruch 1, **dadurch gekennzeichnet, dass**, da das drahtlose Netz ein zellulares Netz ist, das Basisstationen umfasst, welche Endgeräte in Zellen des Netzes bedienen, die erste Einheit und die zweite Einheit Endgeräte (TERS, TERD) sind und dass ein Signal, das zwischen der ersten Einheit und der Basisstation übermittelt wird, eine geringere Dämpfung erfährt als ein Signal, das zwischen der zweiten Einheit und der Basisstation übermittelt wird.

6. Verfahren nach einem der vorhergehenden Ansprüche, **dadurch gekennzeichnet, dass** der erste Schwellenwert und/oder der zweite Schwellenwert geringer als eine Dämpfung (DIS) gewählt werden, die ein Signal erfährt, das direkt zwischen den Sende- und Empfangseinheiten übermittelt wird.

7. Verfahren nach einem der Ansprüche 2 bis 6, **dadurch gekennzeichnet, dass** die Endgeräte zu den Basisstationen, die ihre Zelle bedienen, eine Information über einen Kanal und/oder über eine Interzellinterferenz und Rauschen zurückschicken,
und dass die Basisstation in Abhängigkeit von den Informationen, die die Endgeräte zurückschicken, unter den Knoten der Schnittmenge (RI) mindestens ein Endgerät als Relaisknoten bestimmt.

8. Verfahren nach Anspruch 7, **dadurch gekennzeichnet, dass** die Basisstation eine Teilmenge bestimmt, die mindestens ein Endgerät als Relaisknoten umfasst, der ein Optimum an Übertragungskapazitätsgewinn liefert, der in Abhängigkeit von den Informationen, die die Endgeräte zurückschicken, geschätzt wird.

9. Verfahren nach einem der vorhergehenden Ansprüche, **dadurch gekennzeichnet, dass** die Knoten des Netzes an die Sende- und/oder an die Empfangseinheit ein Testsignal übertragen, das eine Information enthält, die es ermöglicht, eine Signaldämpfung zur Sendeeinheit bzw. zur Empfangseinheit abzuleiten.

10. Computerprogramm mit Anweisungen zur Umsetzung des Verfahrens nach einem der vorgehenden Ansprüche, wenn dieses Programm von einem Prozessor ausgeführt wird.

11. Basisstation eines zellularen Netzes mit Auswahlmitteln zum Auswählen mindestens eines dynamischen Knotens des Netzes als Kandidat zum Weiterleiten eines Datenkommunikationssignals zwischen der Basisstation und einem Zielendgerät des Netzes, wobei die Auswahlmittel zu Folgendem eingerichtet sind:
- Bestimmen mindestens einer ersten Menge von Endgeräten derart, dass ein Signal, das zwischen der Basisstation (BS) und einem Endgerät der ersten Menge übermittelt wird, eine Dämpfung erfährt, die geringer als ein erster vorgegebener Schwellwert (dtl; DIS) ist, **dadurch gekennzeichnet, dass** die Auswahlmittel ferner zu Folgendem eingerichtet sind:
- Bestimmen einer Schnittmenge (RI) zwischen der ersten Menge (Z2) und einer zweiten Menge (Z3) von Knoten des Netzes derart, dass ein Signal, das zwischen dem Zielendgerät und einem Knoten der zweiten Menge übermittelt wird, eine Dämpfung erfährt, die geringer als ein zweiter vorgegebener Schwellenwert (dt2; DIS) ist, und
- Begrenzen der Auswahl von Knoten als mögliche Kandidaten zum Weiterleiten des Kommunikationssignals auf die Knoten der Schnittmenge.

12. Endgerät zum Senden/Empfangen eines Datenkommunikationssignals in einem drahtlosen Netz, umfassend Auswahlmittel zum Auswählen mindestens eines dynamischen Knotens des Netzes als Kandidat zum Weiterleiten des Datenkommunikationssignals zwischen dem Endgerät und einer Zieleinheit des Netzes, wobei die Auswahlmittel zu Folgendem eingerichtet sind:
- Bestimmen mindestens einer ersten Menge von Knoten des Netzes derart, dass ein Signal, das zwischen dem Endgerät und einem Knoten der ersten Menge übermittelt wird, eine Dämpfung erfährt, die geringer als ein erster vorgegebener Schwellenwert (dt2; DIS) ist, **dadurch gekennzeichnet, dass** die Auswahlmittel ferner zu Folgendem eingerichtet sind:
- Bestimmen einer Schnittmenge (RI) zwischen der ersten Menge und einer zweiten Menge von Knoten des Netzes derart, dass ein Signal, das zwischen der Zieleinheit und einem Knoten der zweiten Menge übermittelt wird, eine Dämpfung erfährt, die geringer als ein zweiter vorgegebener Schwellenwert (dt1; DIS) ist, und
- Begrenzen der Auswahl von Knoten als mögliche Kandidaten zum Weiterleiten des Kommunikationssignals auf die Knoten der Schnittmenge.

13. System mit mindestens einem Endgerät und einer Basisstation für ein zellulares Netz, umfassend Auswahlmittel zum Auswählen mindestens eines dynamischen Knotens des Netzes als Kandidat zum Weiterleiten eines Datenkommunikationssignals zwischen der Basisstation und dem Endgerät, wobei die Auswahlmittel zu Folgendem eingerichtet sind:
- Bestimmen mindestens einer ersten Menge von Knoten des Netzes derart, dass ein Signal, das zwischen einem Knoten der ersten Menge und mindestens einer Einheit unter dem Endgerät und der Basisstation übermittelt wird, eine Dämpfung erfährt, die geringer als ein erster vorgegebener Schwellenwert (dtl; dt2; DIS) ist, **dadurch gekennzeichnet, dass** die Auswahlmittel ferner zu Folgendem eingerichtet sind:
- Bestimmen einer Schnittmenge (RI) zwischen der ersten Menge (Z2) und einer zweiten Menge (Z3) von Knoten derart, dass ein Signal, das zwischen einem Knoten der zweiten Menge und der zweiten Einheit unter den Sende- und Empfangseinheiten übermittelt wird, eine Dämpfung erfährt, die geringer als ein Schwellenwert (DIS) ist, der einer Signaldämpfung zwischen der Sendeeinheit und der Empfangseinheit entspricht, und
- Begrenzen der Auswahl von Knoten als mögliche Kandidaten zum Weiterleiten des Kommunikationssignals auf die Knoten der Schnittmenge.

## Claims

1. Method for selecting at least one dynamic node, within a mobile network, as a candidate for relaying a data communication signal between a transmitter entity and a receiver entity of the network,
comprising the steps:
- determine at least a first set of nodes of the network such that a signal communicated between one of the nodes of the first set and at least a first entity from between said transmitter and receiver entities undergoes an attenuation lower than a first predetermined threshold (dt1; dt2; DIS), **characterized in that** it further comprises the steps:
- determine an intersection (RI) between the first set (Z2) and a second set (Z3) of nodes such that a signal communicated between a node of the second set and the second entity, from between said transmitter and receiver entities, undergoes an attenuation lower than a threshold (DIS) corresponding to a signal attenuation between the transmitter entity and the receiver entity, and
- limit the selection of nodes as possible candidates for relaying the communication signal to the nodes of said intersection of sets.

2. Method according to Claim 1, **characterized in that**, the mobile network being a cellular network comprising base stations serving terminals within cells of the network, the first entity is a terminal (TER) and the second entity is a base station (BS).

3. Method according to Claim 2, **characterized in that** the first entity is a terminal and the second entity is a base station, in the two cases where:
- the data communication signal is transmitted (DL) from the base station and to the terminal, and
- the data communication signal is transmitted (UL) from the terminal and to the base station.

4. Method according to either of Claims 2 and 3, **characterized in that** it comprises the steps:
- determine an attenuation that a signal communicated between the terminal and the base station undergoes, and
- if the attenuation of said signal between the terminal and the base station is lower than a second predetermined threshold (dt1), decide on a direct transmission of the communication signal between the base station and the terminal, without making use of a relay.

5. Method according to Claim 1, **characterized in that**, the mobile network being a cellular network comprising base stations serving terminals within cells of the network, the first entity and the second entity are terminals (TERS, TERD), and **in that** a signal communicated between the first entity and the base station undergoes an attenuation lower than a signal communicated between the second entity and the base station.

6. Method according to one of the preceding claims, **characterized in that** the first threshold and/or the second threshold are chosen to be lower than an attenuation (DIS) that a signal communicated directly between the transmitter and receiver entities undergoes.

7. Method according to one of Claims 2 to 6, **characterized in that** the terminals uplink to the base stations serving their cell information on a channel and/or on intercellular interference and noise,
and **in that** the base station determines at least one terminal as a relay node from amongst the nodes of the intersection of sets (RI), depending on information that the terminals uplink.

8. Method according to Claim 7, **characterized in that** the base station determines a sub-set comprising at least one terminal as a relay node supplying an optimum gain in transmission capacity, estimated as a function of said information that the terminals uplink.

9. Method according to one of the preceding claims, **characterized in that** the nodes of the network transmit, to the transmitter entity and/or to the receiver entity, a test signal containing information allowing a signal attenuation to the transmitter entity and/or to the receiver entity, respectively, to be deduced.

10. Computer program comprising instructions for the implementation of the method according to one of the preceding claims, when this program is executed by a processor.

11. Base station of a cellular network, comprising means for selection of at least one dynamic node of the network as a candidate for relaying a data communication signal between the base station and a target terminal of the network, said selection means being configured for:
- determining at least a first set of terminals such that a signal communicated between the base station (BS) and a terminal of the first set undergoes an attenuation lower than a first predetermined threshold (dtl; DIS),
**characterized in that**
the selection means are further configured for:
- determining an intersection (R1) between the first set (Z2) and a second set (Z3) of nodes of the network such that a signal communicated between the target terminal and a node of the second set undergoes an attenuation lower than a second predetermined threshold (dt2; DIS), and
- limiting the selection of nodes as possible candidates for relaying the communication signal to the nodes of the said intersection of sets.

12. Terminal designed to transmit/receive a data communication signal within a mobile network, comprising selection means of at least one dynamic node of the network as a candidate for relaying the data communication signal between said terminal and a target entity of the network, said selection means being configured for:
- determining at least a first set of nodes of the network such that a signal communicated between the terminal and a node of the first set undergoes an attenuation lower than a first predetermined threshold (dt2; DIS),
**characterized in that**
the selection means are further configured for:
- determining an intersection (RT) between the first set and a second set of nodes of the network such that a signal communicated between the target entity and a node of the second set undergoes an attenuation lower than a second predetermined threshold (dtl; DIS) and
- limiting the selection of nodes as possible candidates for relaying the communication signal to the nodes of said intersection of sets.

13. System comprising at least one terminal and one base station, designed for a cellular network, comprising means for selection of at least one dynamic node of the network as a candidate for relaying a data communication signal between the base station and the terminal, said selection means being configured for:
- determining at least a first set of nodes of the network such that a signal communicated between a node of the first set and at least one entity from between the terminal and the base station undergoes an attenuation lower than a first predetermined threshold (dt1; dt2; DIS),
**characterized in that**
the selection means are further configured for:
- determining an intersection (R1) between the first set (Z2) and a second set (Z3) of nodes such that a signal communicated between a node of the second set and the second entity, from between said transmitter and receiver entities, undergoes an attenuation lower than a threshold (DIS) corresponding to a signal attenuation between the transmitter entity and the receiver entity, and
- limiting the selection of nodes as possible candidates for relaying the communication signal to the nodes of said intersection of sets.
